# FASCICULE DE BREVET EUROPEEN

(11) **EP 1 911 985 B1**
(45) Date de publication et mention de la délivrance du brevet: **09.12.2009**
(21) Numéro de dépôt: 07118029.3
(22) Date de dépôt: 08.10.2007
(51) Int. Cl.: F16C 11/06, F16C 11/04, B64C 13/30

(54) **Assemblage d'un dispositif rotulant sur une chape de renvoi d'angle, système de commande d'un redresseur à calage variable le comportant, et moteur d'aéronef en étant muni**
Montage einer Gelenkvorrichtung auf einem Gabelgelenk zur Winkelrückstellung, Steuersystem einer Sperre mit variablem Verschluss, das diese umfasst, und damit ausgestatteter Luftfahrzeugmotor
Assembly of a rolling device on an angle transmission yoke, control system of a synchronising ring with variable setting comprising it, and aircraft engine equipped with same

(30) Priorité: 13.10.2006 FR 0654275
(43) Date de publication de la demande: 16.04.2008
(73) Titulaire: SNECMA, 75015 Paris (FR)
(72) Inventeur: Bouru, Michel André, 77950 Montereau sur le Jard (FR); Etoile, Gérard Joël Patrick, 77140 Nemours (FR)
(74) Mandataire: Ilgart, Jean-Christophe

(56) Documents cités:
- FR-A- 2 005 524
- US-A- 2 728 975
- US-A- 3 198 563
- US-A- 4 174 137
- US-A- 5 501 421

## Description

### DOMAINE TECHNIQUE

La présente invention se rapporte au domaine des assemblages de dispositifs rotulants sur des chapes de renvoi d'angle.

Elle vise un assemblage d'un dispositif rotulant sur une chape de renvoi d'angle.

Elle vise aussi un système de commande d'un redresseur à calage variable comportant un tel assemblage d'un dispositif rotulant sur une chape de renvoi d'angle.

Elle vise enfin un moteur d'aéronef muni d'au moins un tel assemblage d'un dispositif rotulant sur une chape de renvoi d'angle.

### ÉTAT DE LA TECHNIQUE ANTÉRIEURE

L'assemblage d'un dispositif rotulant sur une chape de renvoi d'angle est connu, par exemple dans le document US 4 174 137. De manière connue, la chape de renvoi d'angle comporte deux oreilles parallèles et percées chacune d'un alésage aligné avec l'alésage de l'autre oreille. De manière également connue, le dispositif rotulant comporte une bague intérieure sphérique, ou noix de rotule, percée d'un alésage de bague, qui est entourée par une bague extérieure à empreinte sphérique correspondant à la noix, ou cage de rotule, elle-même portée par un support. Le support est donc mobile dans toutes les directions de rotation, ou "rotulant", par rapport à la chape.

Ce document divulgue un assemblage classique du dispositif rotulant sur la chape de renvoi d'angle, dans lequel la bague intérieure est serrée entre les deux oreilles de la chape au moyen d'un couple vis-écrou. La tige de la vis traverse successivement l'alésage de l'une des oreilles de la chape, puis l'alésage de bague, puis l'alésage de l'autre oreille de la chape, et l'écrou est serré sur l'extrémité de la vis, qui est filetée à cet effet. Un tel assemblage présente une dimension importante suivant la direction axiale de la vis. En effet, à la dimension de la chape suivant cette direction viennent s'ajouter la hauteur de la tête de la vis et la hauteur de l'écrou.

Or, dans certaines configurations particulières, l'espace disponible pour loger un assemblage de ce type est réduit. En effet, comme c'est le cas par exemple pour les systèmes de commande des redresseurs à calage variable d'un compresseur de turbomachine, l'assemblage du dispositif rotulant sur la chape de renvoi d'angle est inséré dans un volume de largeur réduite, de l'ordre de quelques centimètres.

Le diamètre de la noix sphérique est généralement imposé par l'application et notamment par les efforts qu'elle doit subir. Les oreilles de la chape, entre lesquelles la noix est montée, doivent être à une distance permettant un débattement angulaire suffisant du support tournant. Les extrémités de la noix et l'écrou ajoutent à l'encombrement transversal du dispositif, qui peut devenir excessif dans de petits boîtiers.

Le besoin existe donc de proposer un assemblage d'un dispositif rotulant sur une chape de renvoi d'angle qui puisse être mis en oeuvre avec un encombrement restreint.

US-A-5 501 421, FR-A- 2 005 524 et US -A-2 728 975 illustrent des conceptions assez voisines de l'invention.

### EXPOSÉ DE L'INVENTION

Un premier but de l'invention est de proposer un assemblage d'un dispositif rotulant sur une chape de renvoi d'angle qui puisse être mis en oeuvre avec un encombrement restreint. C'est le cas par exemple pour les assemblages de dispositifs rotulants sur des chapes de renvoi d'angle qui sont mis en oeuvre dans les systèmes de commande des redresseurs à calage variable d'un compresseur de turbomachine.

Un deuxième but de la présente invention est de proposer un assemblage de dispositif rotulant sur une chape de renvoi d'angle qui respecte certaines contraintes d'assemblage. C'est ainsi que la noix sphérique doit rester fixe. Cependant, on ne souhaite pas qu'elle soit montée à force sur la tige traversant la chape afin d'éviter des grippages. C'est pourquoi elle est montée par un ajustage glissant juste sur la tige et maintenue en place par un serrage de pièces dans la direction de l'axe de la tige, que l'écrou effectue.

La suppression de l'écrou doit se faire en maintenant la noix sphérique en place contre les mouvements rotatifs et axiaux. Il faut aussi souligner que le coincement de la noix sphérique, entre les deux oreilles de la chape, n'est pas une excellente solution puisqu'elle demande encore des tolérances de fabrication strictes et peut aussi entraîner des déformations nuisibles à la durée de vie du renvoi d'angle.

Le genre de l'invention se rapporte à un assemblage d'un dispositif rotulant sur une chape de renvoi d'angle par des moyens d'assemblage, lesdits moyens d'assemblage comportant une tige d'assemblage et d'autres moyens d'assemblage,
dans lequel ledit dispositif rotulant comporte une bague intérieure (la noix sphérique) percée d'un alésage de bague,
dans lequel ladite chape de renvoi d'angle comporte deux oreilles percées chacune d'un alésage d'oreille respectif, lesdits alésages d'oreille étant alignés l'un avec l'autre suivant un axe d'assemblage, et
dans lequel ladite tige d'assemblage traverse successivement l'un des alésages d'oreille, puis l'alésage de bague, puis l'autre alésage d'oreille,
où lesdits autres moyens d'assemblage comportent un ajustement serré d'une portion de la tige sur une surface dans laquelle ladite portion est engagée.

On se fie à un ajustement serré pour remplacer le système à vis et écrou, en liaison généralement à d'autres moyens d'assemblage pour garantir l'immobilisation de la noix sphérique ou bague intérieure en rotation et en translation le long de la tige. En arrêtant la tige traversant la chape par un ajustement serré situé généralement à travers des alésages d'oreille, l'extrémité de la vis où le filetage était opéré et qui devait saillir hors de la chape pour recevoir l'écrou devient inutile.

La surface qui donne l'ajustement serré avec la portion de la tige peut appartenir à une douille engagée dans un des alésages d'oreille de chape. Une telle douille aura souvent l'avantage de contribuer au maintien de la bague intérieure en portion axiale.

La portion de tige ayant l'ajustement serré sera souvent opposée à une tête de la tige s'appuyant sur une face extérieure d'une des deux oreilles de la chape et faisant partie des autres moyens d'assemblage, plus précisément définissant une butée de la tige.

L'ajustement serré constitue un arrêt en translation aussi bien qu'en rotation de la tige. D'autres moyens d'assemblage doivent être ajoutés pour retenir aussi la bague intérieure. Ces moyens peuvent être situés sur les pièces supplémentaires, qu'il faut aussi retenir en translation et en rotation et qui sont de genres variés, comme on le verra d'après les exemples décrits. Ces moyens d'assemblage peuvent comprendre ainsi une douille engagée dans un des alésages d'oreille de la chape autour de la tige et comprenant une face d'extrémité en appui sur la bague extérieure ; ou deux douilles de ce genre, qui sont alors engagées dans chacun des alésages d'oreille de la chape. De telles douilles ont pour fonction principale de retenir la bague intérieure en translation le long de l'axe. La position axiale de la bague intérieure est déterminée et invariable si elle est plaquée contre la face interne d'une oreille de chape ou contre l'entretoise elle-même plaquée contre l'oreille de chape.

L'invention est caractérisée par des moyens d'assemblage particuliers permettant l'arrêt en rotation, qui consistent en une paire de facettes planes en opposition l'une à l'autre, dont l'une est opérée au fond d'une échancrure d'une des oreilles de la chape. L'autre des facettes est opérée, selon les réalisations, sur une tête de la tige, sur une des douilles, ou sur un collet circulaire érigé à une extrémité polaire de la bague inférieure, pour retenir en rotation l'une ou l'autre de ces pièces. Un avantage important de ces paires de facettes est l'économie de volume, puisqu'aucune pièce supplémentaire n'est nécessaire et que cet agencement implique une imbrication des pièces existantes, sans aucune excroissance par rapport aux conceptions où il n'existe pas. Il est aussi fiable et solide.

D'autres moyens d'assemblage, destinés à arrêter les mouvements en rotation, comprennent des ergots et des redans appariés unissant la bague intérieure à d'autres pièces de l'assemblage, qui peuvent être les douilles mentionnées ci-dessus, ou encore la douille quand elle est unique, et une tête de la tige. La tige étant retenue en rotation par l'ajustement serré, et au moins une des douilles l'étant par un autre moyen tel qu'un deuxième ajustement serré, la bague intérieure est alors retenue en rotation aussi. Un assez grand nombre de moyens d'arrêt en translation et en rotation est donc nécessaire pour retenir les pièces de l'assemblage et procurer la stabilité souhaitée au montage.

Sont à envisager d'autres moyens d'assemblage, parmi lesquels on peut citer des sertissage opérés entre des pièces voisines en rabattant une portion déformable de l'une de ces pièces sur l'autre. Les sertissages peuvent être effectués avec une force suffisante pour produire à la fois des arrêts en translation et des arrêts en rotation. Ces derniers sont plus sûrement garantis si les sertissages concernent seulement des portions angulaires déformables, qu'on rabat alors dans des fentes angulaires de la pièce voisine. Des exemples de sertissages peuvent être exécutés en rabattant un collet à une extrémité de la tige sur la douille, des languettes de la douille dans des fentes de la tige, ou un collet à une extrémité de la tige sur une des oreilles de la chape.

Certaines dispositions de l'assemblage permettent de réduire encore l'encombrement latéral en limitant les longueurs de saillie hors de la chape qui subsistent après la suppression du système à vis et écrou. C'est ainsi que, quand la tige comprend une tête, elle peut être logée dans une échancrure sur la face extérieure, ou comprendre une forme tronconique s'enfonçant dans un creux conique de l'oreille de la chape. Dans d'autres conceptions, la tige comprend une tête, et une des oreilles de chape un creux dans lequel la tête est partiellement enfoncée, au lieu de buter contre l'oreille de la chape. C'est alors un autre moyen que la tête de tige qui définit la position d'arrêt en translation de l'assemblage.

Si la tige est enfoncée complètement dans l'alésage d'oreille de chape, l'assemblage est alors complètement inclus dans la chape et la plus grande économie d'espace est obtenue.

Une réalisation particulièrement simple est caractérisée en ce que la bague intérieure est retenue entre une tête de la tige et soit une des oreilles de chape, soit une entretoise située entre la bague intérieure et une des oreilles de chape.

L'invention concerne encore un système de commande d'un redresseur à calage variable et un moteur d'aéronef muni d'un assemblage conformément aux indications précédentes. Ce système et ce moteur n'étant pas modifiés par ailleurs par rapport aux conceptions connues, ils ne seront pas décrits en détail ici.

### BRÈVE DESCRIPTION DES DESSINS

L'invention sera mieux comprise à la lecture de la description détaillée qui va suivre de modes d'assemblage, donnés à titre illustratif et nullement limitatif, en référence aux dessins annexés,
dans lesquels :
- la figure 1 représente, en coupe suivant un plan longitudinal de symétrie, un premier mode de réalisation de l'assemblage (conforme à l'invention) ;
- la figure 2 représente, en perspective, une tige d'assemblage selon le premier mode de réalisation ;
- la figure 3 est une vue en perspective d'une bague intérieure du dispositif rotulant selon le premier mode de réalisation ;
- la figure 4 est une vue en perspective des deux douilles d'assemblage selon le premier mode de réalisation ;
- la figure 5 représente, en coupe suivant un plan longitudinal de symétrie, un deuxième mode de réalisation de l'assemblage (conforme à l'invention) ;
- la figure 6 représente, en coupe suivant un plan longitudinal de symétrie, un troisième mode de réalisation de l'assemblage (non-conforme, en soi, à l'invention) ;
- la figure 7 est une vue en perspective éclatée du troisième mode de réalisation de l'assemblage ;
- la figure 8 est une autre vue en perspective montrant les deux douilles d'assemblage selon le troisième mode de réalisation ;
- la figure 9 est une autre vue en perspective de l'assemblage selon le troisième mode de réalisation en configuration précédent l'assemblage ;
- la figure 10 représente, en coupe suivant un plan longitudinal de symétrie, un quatrième mode de réalisation de l'assemblage (conforme à l'invention) ;
- la figure 11 représente, en coupe suivant un plan longitudinal de symétrie, un cinquième mode de réalisation de l'assemblage (conforme à l'invention) ;
- la figure 12 représente, en coupe suivant un plan longitudinal de symétrie, un sixième mode de réalisation de l'assemblage (conforme à l'invention) ;
- la figure 13 représente, en coupe suivant un plan longitudinal de symétrie, un septième mode de réalisation de l'assemblage (conforme à l'invention) ;
- la figure 14 représente, en coupe suivant un plan longitudinal de symétrie, un huitième mode de réalisation de l'assemblage (conforme à l'invention) ;
- les figures 15 à 17 représentent, respectivement, trois variantes de réalisation de faces de blocage en rotation, qui sont communes aux sixième, septième, huitième, dixième et quatorzième modes de réalisation ;
- la figure 18 représente, en coupe suivant un plan longitudinal de symétrie, un neuvième mode de réalisation de l'assemblage (non conforme en soi à l'invention);
- la figure 19 représente, en perspective éclatée, la bague intérieure, une douille d'assemblage et la tige d'assemblage, pour le neuvième mode de réalisation ;
- la figure 20 représente une vue en perspective du neuvième mode de réalisation,
- la figure 21 représente, en coupe suivant un plan longitudinal de symétrie, un dixième mode de réalisation de l'assemblage (conforme à l'invention) ;
- la figure 22 représente, en coupe suivant un plan longitudinal de symétrie, un onzième mode de réalisation de l'assemblage (non conforme en soi à l'invention) ;
- la figure 23 représente, en coupe suivant un plan longitudinal de symétrie, un douzième mode de réalisation de l'assemblage (non conforme en soi à l'invention) ;
- la figure 24 représente, en coupe suivant un plan longitudinal de symétrie, un treizième mode de réalisation de l'assemblage (non conforme en soi à l'invention);
- la figure 25 représente, en coupe suivant un plan longitudinal de symétrie, un quatorzième mode de réalisation de l'assemblage (conforme à l'invention) ;
- la figure 26 représente, en coupe suivant un plan longitudinal de symétrie, un quinzième mode de réalisation de l'assemblage (non conforme en soi à l'invention).

### EXPOSÉ DÉTAILLÉ DE MODES DE RÉALISATION PARTICULIERS

On va tout d'abord décrire, en référence à l'ensemble des figures, les éléments communs à tous les modes de réalisation d'un assemblage d'un dispositif rotulant sur une chape de renvoi d'angle. Dans la suite de la description, et afin de simplifier celle-ci, on appellera « assemblage » un assemblage d'un dispositif rotulant sur une chape de renvoi d'angle.

L'assemblage 10 selon l'invention est disposé à l'intérieur d'un boîtier 12 (seulement esquissé ici) dont les dimensions intérieures sont fixées. En particulier, le boîtier 12 comporte une première face intérieure 14 et une deuxième face intérieure 16 disposées en regard l'une de l'autre et parallèles entre elles, qui sont séparées par une distance D12 fixée. Le boîtier 12 est par exemple un boîtier faisant partie d'un système de commande d'un ou plusieurs étages de redresseurs à calage variable.

L'assemblage 10 comporte une chape 20 et un dispositif rotulant 40 qui sont assemblés entre eux par des moyens d'assemblage. Ces moyens d'assemblage comportent une tige d'assemblage 60 et d'autres moyens d'assemblage qui seront précisés plus loin.

La chape 20 comporte une première oreille de chape 22 percée d'un premier alésage d'oreille 24 et une deuxième oreille de chape 30 percée d'un deuxième alésage d'oreille 32. Les deux alésages d'oreille 24, 32 sont alignés suivant la direction d'un axe d'assemblage 2.

La chape 20 comporte une première face extérieure 26 qui se trouve en regard de la première face intérieure 14 du boîtier 12 à une distance D1 de celle-ci, et une deuxième face extérieure 34 qui se trouve en regard de la deuxième face intérieure 16 du boîtier 12 à une distance D2 de celle-ci.

Le dispositif rotulant 40 comporte, de manière connue en soi, un support 42 sur lequel est fixée une bague extérieure 44, encore appelée cage, dans laquelle est disposée une bague intérieure 46 encore appelée noix. La bague extérieure 44 comporte une face intérieure concave et sphérique qui coopère avec une face convexe et sphérique de la bague intérieure 46 pour autoriser trois degrés de liberté en rotation entre la bague extérieure 44 et la bague intérieure 46. La bague intérieure 46 est percée d'un alésage de bague 48.

La tige d'assemblage 60 comporte un corps sensiblement cylindrique. Elle présente une première extrémité 66 et une deuxième extrémité 64.

La chape 20 et le dispositif rotulant 40 sont assemblés au moyen de la tige d'assemblage 60 qui traverse successivement le premier alésage d'oreille 24, l'alésage de bague 48 et le deuxième alésage d'oreille 32, suivant l'axe d'assemblage 2.

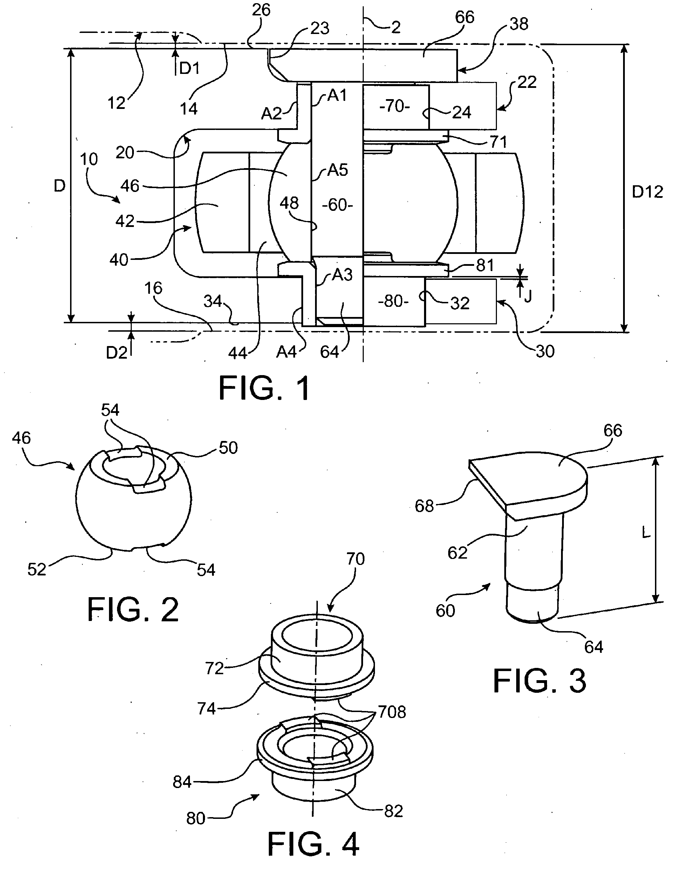

Sur les exemples illustrés aux figures, la tige 60 d'assemblage est dimensionnée de telle manière que sa longueur axiale L (illustrée à la figure 3) est peu supérieure, égale ou inférieure à la distance D (illustrée à la figure 1) qui sépare la première face extérieure 26 et la deuxième face extérieure 34. Par suite, lorsque la tige 60 d'assemblage est en place dans les trois alésages 24, 48, 32, elle est entièrement agencée entre ces deux faces extérieures 26, 34. En d'autres termes, sa première extrémité 66 ne dépasse pas ou quasiment pas au-delà de la première face extérieure 26, et sa deuxième extrémité 64 ne dépasse pas ou quasiment pas au-delà de la deuxième face extérieure 34.

En plus de la tige 60, l'assemblage 10 comporte d'autres moyens d'assemblage, qui comportent :
- des moyens de blocage en translation axiale de la tige 60 suivant l'axe d'assemblage 2,
- des moyens de blocage en rotation, qui interdisent une rotation de la bague intérieure 46 par rapport à la tige 60 autour de l'axe d'assemblage 2.

Ces autres moyens d'assemblage sont entièrement agencés entre les deux faces extérieures 26, 34 de la chape 20. En d'autres termes, aucun d'eux ne dépasse au-delà de la première face extérieure 26, ni au-delà de la deuxième face extérieure 34.

Il découle de ce qui précède que la distance D1 qui sépare la première face extérieure 26 et la première face intérieure 14 du boîtier 12 peut être réduite au minimum. De manière analogue, la distance D2 qui sépare la deuxième face extérieure 34 et la deuxième face intérieure 16 du boîtier 12 peut être réduite au minimum. Par conséquent, pour une valeur fixée de la distance D12 entre les deux faces intérieures du boîtier 12, il est possible de dimensionner la chape 20 de telle manière que la distance D entre les deux faces extérieures 26, 34 de la chape 20 soit très proche de cette distance D12.

On va maintenant décrire les moyens de blocage en translation et les moyens de blocage en rotation propres à chaque mode de réalisation de l'assemblage 10 selon l'invention.

### Premier mode de réalisation

En se référant à la figure 1, il est représenté, en coupe suivant un plan longitudinal de symétrie, un premier mode de réalisation de l'assemblage 10 selon l'invention.

La première oreille de chape 22 comporte une échancrure 38 sur sa face extérieure en regard de la première face intérieure 14 du boîtier 12. Cette échancrure 38 s'étend à partir de l'extrémité libre de la première oreille 22, traverse le premier alésage d'oreille 24, se prolonge au-delà de celui-ci sur une certaine distance, et s'interrompt en rejoignant la première face extérieure 26 de la chape 20. Cette échancrure 38 définit sur l'extérieur de la première oreille 22 une facette sensiblement plane 23 qui est perpendiculaire au plan longitudinal de symétrie (plan de la figure 1) de la chape 20 et parallèle à l'axe d'assemblage 2.

La bague intérieure 46 du dispositif rotulant 40 est représentée en perspective sur la figure 2. Elle présente sensiblement une forme de sphère percée d'un alésage de bague 48 et coupée à ses deux pôles en définissant une première face transversale 50 de bague et une deuxième face transversale 52 de bague qui sont perpendiculaires à la direction de l'alésage de bague 48. Chaque face transversale 50, 52 porte deux redans 54 diamétralement opposés.

La tige d'assemblage 60 est représentée en perspective sur la figure 3. Elle porte, à sa première extrémité 62, une tête de tige 66 qui présente sensiblement une forme de « D ». Cette tête de tige 66 présente une facette 68 sensiblement plane parallèle à la direction de la tige d'assemblage 60. La deuxième extrémité 64 de la tige d'assemblage 60 présente un diamètre moindre que celui du reste de la tige d'assemblage 60.

L'assemblage 10 comporte une première douille d'assemblage 70 et une deuxième douille d'assemblage 80 qui sont représentées en perspective sur la figure 4. Les deux douilles d'assemblage 70, 80 sont dotées respectivement d'un corps cylindrique 72, 82 et d'un épaulement radial d'extrémité 74, 84. Chaque épaulement 74, 84 porte, sur sa face opposée au corps 72, 82, deux ergots 708 diamétralement opposés.

On va maintenant décrire le procédé de montage de l'assemblage 10, en référence à la figure 1.

La première douille 70 d'assemblage est disposée dans le premier alésage d'oreille 24 avec son épaulement 74 orienté vers la deuxième oreille 30. La deuxième douille 80 d'assemblage est disposée dans le deuxième alésage d'oreille 32 avec son épaulement 84 orienté vers la première oreille 22. Les deux douilles 70, 80 d'assemblage sont orientées autour de l'axe d'assemblage 2 de telle sorte que leurs ergots respectifs 708 soient en regard les uns des autres.

Puis le dispositif rotulant 40 est introduit entre les oreilles 22, 30 de la chape 20, de telle sorte que la bague intérieure 46 soit positionnée entre les deux épaulements 74, 84 des douilles d'assemblage 70, 80, et que les quatre ergots 708 des deux douilles 70, 80 se trouvent respectivement dans les quatre redans 54 de la bague intérieure 46, et de telle sorte que l'alésage de bague 48 soit aligné avec les deux alésages d'oreille 24, 32.

Puis la tige 60 d'assemblage est introduite par sa deuxième extrémité 64 dans la première douille 70, puis dans l'alésage de bague 48, puis dans la deuxième douille 80, suivant la direction de l'axe d'assemblage 2, jusqu'à ce que la tête de tige 66 vienne en appui contre l'échancrure 38. La tige 60 d'assemblage est orientée autour de l'axe d'assemblage 2 de telle sorte que la facette plane 68 de la tête de tige 66 soit parallèle à la facette plane 23 de l'échancrure 38.

La tête de tige 66 et l'échancrure 38 sont dimensionnées de telle sorte que la facette plane 68 de la tête de tige 66 soit en butée contre la facette plane 23 de l'échancrure 38.

La tête de tige 66 et l'échancrure 38 sont dimensionnées de telle manière que ladite tête de tige 66 ne dépasse pas au-delà de la première face extérieure 26 de la chape 20.

La tige d'assemblage 60 est dimensionnée de telle manière que sa deuxième extrémité 64 ne dépasse pas au-delà de la deuxième face extérieure 34 de la chape 20, ou très peu.

Les deux douilles 70, 80 d'assemblage sont dimensionnées de telle manière que les deux faces transversales 50, 52 de la bague intérieure 46 soient en appui contre leurs épaulements 74, 84. Les ergots 708 des douilles 70, 80 et les redans 54 de la bague intérieure 46 sont formés et dimensionnés de telle manière que les ergots 708 viennent en prise dans les redans 54 et empêchent une rotation axiale entre la bague intérieure 46 et chacune des deux douilles 70, 80.

Les deux douilles d'assemblage 70, 80 sont également dimensionnées de telle manière que la hauteur du corps 72 de la première douille d'assemblage 70 soit inférieure ou sensiblement égale à la hauteur de la première oreille 22 de la chape 20 au niveau de l'échancrure, de telle sorte que la tête de tige 68 puisse bien venir en butée contre l'échancrure 38.

Le diamètre intérieur du corps 84 de la deuxième douille 80 d'assemblage est inférieur au diamètre intérieur du corps 72 de la première douille 70 d'assemblage, de manière sensiblement analogue à la variation de diamètre entre la deuxième extrémité de tige 64 et la première extrémité de tige 62.

Le diamètre intérieur de la première douille 70 et la partie de plus grand diamètre de la tige 60 sont dimensionnés de manière à autoriser un premier ajustement A1 glissant juste, par exemple de type normalisé H7g6, entre ces deux pièces 60, 70.

Le corps 72 de la première douille 70 et le premier alésage d'oreille 24 de la première oreille 22 sont dimensionnés de manière à réaliser un deuxième ajustement A2 serré, par exemple de type normalisé H7p6, entre ces deux pièces 22, 70.

La deuxième extrémité 64 de la tige d'assemblage 60 et le diamètre intérieur de la deuxième douille d'assemblage 80 sont dimensionnés de manière à réaliser un troisième ajustement A3 serré, par exemple de type normalisé H7p6, entre ces deux pièces 60, 80.

Le corps 82 de la première douille 80 et le deuxième alésage d'oreille 32 de la deuxième oreille 30 sont dimensionnés de manière à autoriser un quatrième ajustement glissant juste A4, par exemple de type normalisé H7g6, entre ces deux pièces 22, 80.

La partie de plus grand diamètre de la tige 60 d'assemblage et l'alésage de bague 48 de la bague intérieure 46 sont dimensionnés de manière à autoriser un cinquième ajustement A5 glissant juste, par exemple de type normalisé H7g6, entre ces deux pièces 46, 60.

Le premier mode de réalisation de l'assemblage 10 comporte des moyens de blocage en translation de la tige 60 d'assemblage par rapport à la chape 20, qui sont la tête de tige 66 et l'échancrure 38 en coopération.

Le premier mode de réalisation de l'assemblage 10 comporte des moyens de blocage en rotation pour interdire une rotation de la bague intérieure 46 par rapport à la tige 60 d'assemblage autour de l'axe d'assemblage 2.

Ces moyens de blocage en rotation comportent des premiers moyens de blocage en rotation de la bague intérieure 46 par rapport à chacune des douilles 70, 80 d'assemblage, qui sont les ergots 708 et les redans 54 en coopération.

Ces moyens de blocage en rotation comportent des deuxièmes moyens de blocage en rotation de la tige 60 d'assemblage par rapport à la deuxième douille 80 d'assemblage, qui sont l'ajustement serré entre ces deux pièces.

Ces moyens de blocage en rotation comportent des troisièmes moyens de blocage en rotation de la première douille d'assemblage 70 par rapport à la chape 20, qui sont l'ajustement serré entre la première douille d'assemblage 70 et la première oreille 22.

Le premier mode de réalisation de l'assemblage 10 comporte, en outre, des quatrièmes moyens de blocage en rotation de la tige 60 par rapport à la chape 20 autour de l'axe d'assemblage 2, qui sont les facettes planes 68 et 23 en coopération. Ces quatrièmes moyens de blocage en rotation viennent en renfort des troisièmes moyens de blocage en rotation.

Ainsi qu'on le voit, et qu'on le retrouvera dans les autres modes de réalisation de l'invention, les ajustements tels que A1 à A5 sont une combinaison d'ajustements serrés pour introduire les blocages en rotation nécessaires et d'ajustements glissant juste pour autoriser un montage facile, mais sans risques d'autoriser un excentrement de la bague intérieure 46 et un défaut dans la transmission du mouvement.

On retrouvera notamment un cinquième ajustement A5 glissant dans les autres modes de réalisation. La raison est que le grippage de la bague intérieure 46 sur la tige 60 devrait être évité.

Le serrage axial du système est réalisé à la fin du montage en rapprochant le plus possible la seconde douille 80 de la tête de tige 66 et en maintenant cette dernière en butée à la surface de l'échancrure 38. La seconde douille 80 glisse dans le deuxième alésage d'oreille 32 en laissant apparaître un jeu J final mesuré en direction de l'axe 2 entre la seconde oreille 30 et la collerette 81 de la douille 80. La bague intérieure 46 finit par être enserrée entre les collerettes 71 et 81 des douilles 70 et 80 orientées l'une vers l'autre, la collerette 71 de la première douille 70 bute contre la première oreille 22 et le serrage au troisième ajustement A3 retient le système dans cette position.

On a mentionné que le deuxième ajustement A2 était serré. Il est possible de le choisir glissant juste puisque les rotations de sa première douille 70 sont interdites par les ergots 708, le serrage du troisième ajustement A3 et la butée entre les facettes 68 et 222.

### AUTRES MODES DE REALISATION

D'une façon générale, les numéros de référence des éléments homologues de réalisations différentes porteront les mêmes références à deux chiffres précédées de 200, 300, etc.

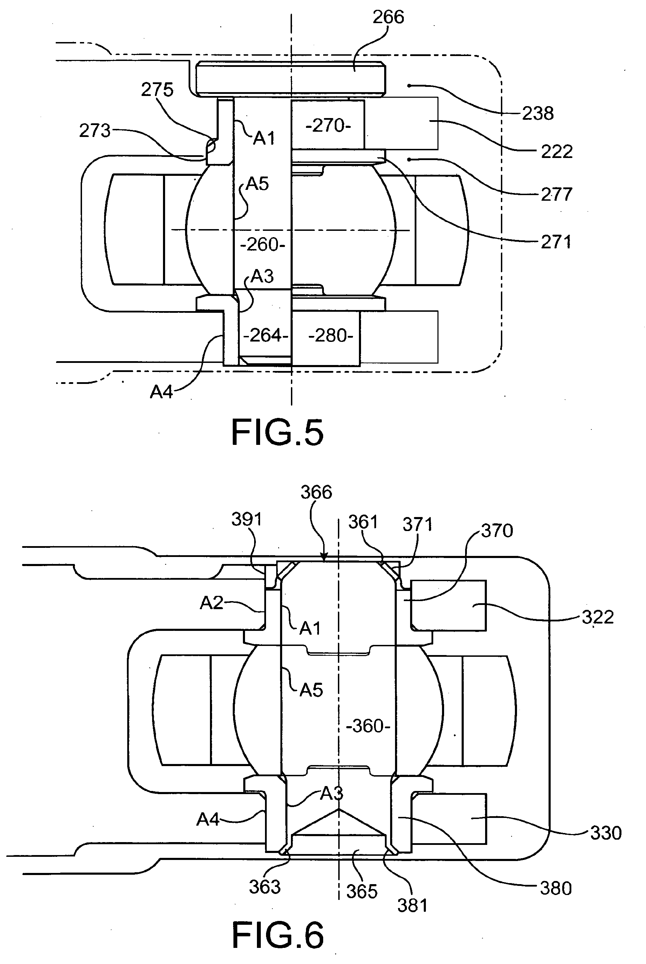

Le deuxième mode de réalisation est décrit à la figure 5. Il est en grande partie identique au précédent, de sorte que sa description complète n'est pas utile et que seuls les éléments originaux en seront décrits. La bague intérieure 246 est ainsi la même que la précédente. La tige 260 comprend désormais une tête 266 dépourvue d'une facette plane de butée telle que 68 établissant un blocage en rotation ; elle peut au contraire être parfaitement circulaire. C'est la première douille, référencée par 270, qui porte désormais un moyen analogue, à savoir une facette plane 273 sur une partie de tour de la collerette 271 ; cette facette plane 273 est en appui sur une facette plane 275 établie au fond d'une deuxième échancrure 277 que porte désormais la première oreille 222 à l'opposé de l'échancrure 238 semblable à celle qu'on a déjà décrite sous la référence 38. Les ajustement A1 à A5 sont identiques au précédent, c'est-à-dire que l'ajustement A3 entre l'extrémité (ici 264) de la tige (ici 260) et la seconde douille (ici 280) est serré et les autres peuvent être glissants, même s'il est possible de choisir un serrage pour le deuxième ajustement A2 entre la première oreille 222 et la première douille 270 comme dans la réalisation précédente. La concentricité des systèmes mécaniques est même meilleure si le deuxième ajustement A2 est serré.

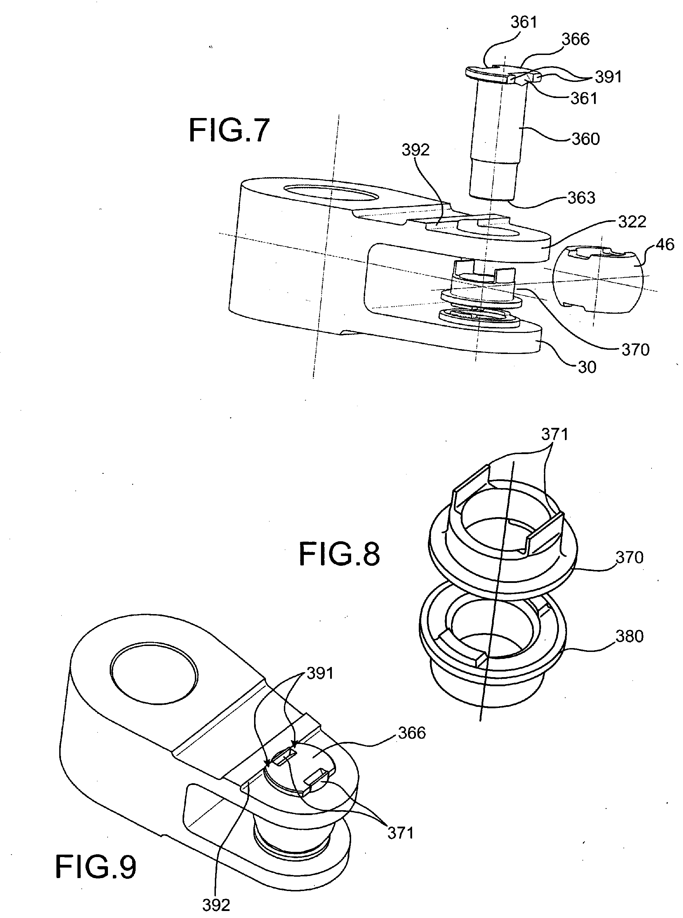

Le troisième mode de réalisation, représenté aux figures 6, 7, 8 et 9, implique l'emploi d'une tige 360, et la première oreille 322 n'a pas besoin d'être échancrée. La première douille 370 est munie des languettes déformables 371 du côté extérieur de la première oreille 322, pointant dans la direction de l'axe 2, qu'on peut rabattre latéralement l'une vers l'autre sur des fentes 361 chanfreinées dans la tête de tige 366 de manière à réaliser un sertissage. De façon analogue, l'extrémité opposée de la tige 360 porte une portion amincie 363 consécutive à la formation d'un alésage 365 s'enfonçant à quelque profondeur dans la tige 360, et cette portion amincie 363 peut être rabattue sur un chanfrein 381 établi sur la face interne de la seconde douille 380, du côté extérieur de la seconde oreille 330. Ce double sertissage immobilise la tige 360 en rotation et en translation contre les douilles 370 et 380. L'ajustement A2 est serré ou glissant. Les rotations d'ensemble de la tige 360, des douilles 370 et 380 et de la bague intérieure 46 sont interdites par l'engagement de faces planes 391 de la tête de tige 366 sur un muret 392 de la première oreille 322 (figure 9). L'ajustement A3 est serré pour retenir la douille 280 dont une orientation identique à celle de la douille 270. Les autres ajustements A1, A4 et A5 sont glissants comme précédemment. Dans ce mode de réalisation, la douille 370 ainsi que les extrémités de la tige 360 doivent saillir quelque peu à l'extérieur des oreilles 322 et 330 pour qu'un outil de sertissage les atteigne facilement. La bague intérieure 346 est la même que les précédentes.

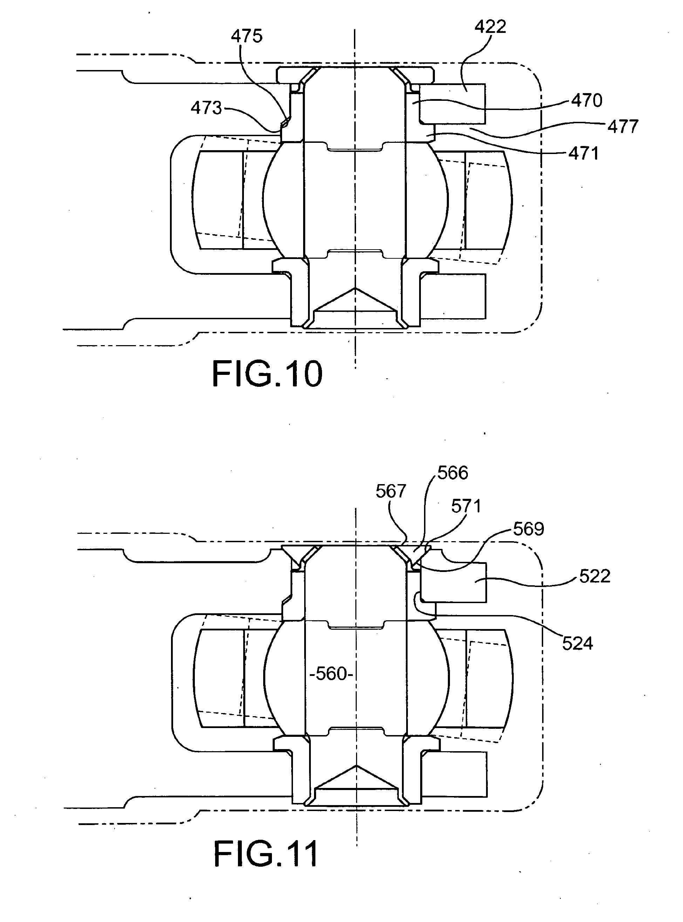

Le quatrième mode de réalisation, illustré à la figure 10, cumule les caractéristiques des deux précédents, à savoir l'utilisation de sertissages semblables à celui du troisième mode de réalisation et l'interaction d'une facette plane d'extrémité 473 établie sur la collerette 471 de la première douille 470 sur une facette plane correspondante 475 au fond d'une échancrure 477 sur la face interne de la première oreille 422. Les ajustements A2 et A3 sont encore serrés, les trois autres, A1, A4 et A5, glissants.

Le cinquième mode de réalisation est illustré à la figure 11 comme une variante du quatrième, mais on pourrait l'appliquer aux autres modes de réalisations précédents : il se distingue en ce que la tige 560 comprend une tête 566 qui n'est pas plate mais tronconique, avec une face supérieure 567 plate et une face inférieure 569 en appui sur un chanfrein 571 établi à l'extrémité extérieur de l'alésage 524 de la première oreille 522. Les ajustements sont les mêmes que précédemment. L'avantage de cette solution est que l'agencement est plus compact puisque la tête 566 dépasse à peine de la première oreille 522.

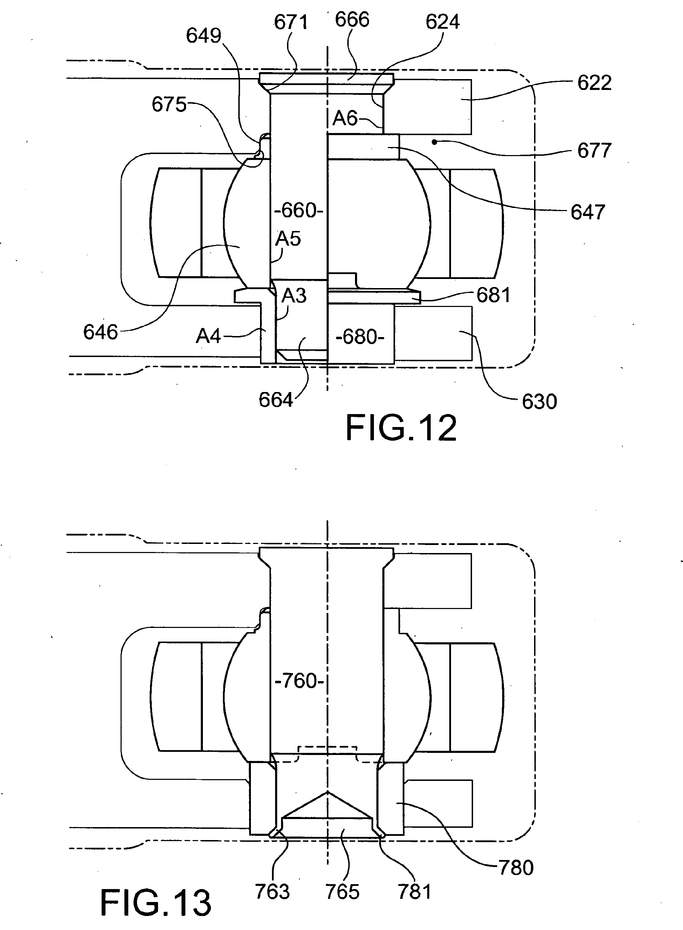

La réalisation suivante, la sixième, est illustrée à la figure 12. La douille appelée première douille dans les réalisations précédentes et située du côté de la tête de tige n'existe plus, et la tige 660 est engagée directement dans l'alésage 624 de la première oreille 622. La bague intérieure 646 est prolongée au pôle supérieur par une collerette 647 en contact avec la face interne de la première oreille 622 et qui est munie, sur une partie de son pourtour, d'une facette plate 649 qui vient en face d'une facette plate établie au fond d'une échancrure 677 creusée dans la première oreille 622. Ce dispositif d'arrêt en rotation entre la chape et la bague interne 646 ressemble à celui qui avait été utilisé, par exemple, dans le deuxième mode de réalisation entre la première douille 270 et la chape.

La tige 660 comprend une tête tronconique 666 engagée dans un chanfrein 671 de la première oreille 622 afin d'affleurer seulement légèrement à sa surface et de limiter l'encombrement. Enfin, le reste du dispositif est semblable à celui du premier mode de réalisation par exemple, avec une douille 680 semblable à la seconde douille 80 et une extrémité 664 amincie de la tige 660 et entre dans cette douille 680.

Les ajustements A1 et A2 des réalisations précédentes sont remplacés par un ajustement A6 entre la tige 660 et l'alésage 624 de la première oreille 622. L'ajustement A3 reste serré, les autres A4, A5 et A6 sont glissants. La rotation des éléments du système est interdite par la butée entre les faces plates 649 et 675, par les ergots entre la bague intérieure 646 et la douille 680 (ils sont semblables à ceux du premier mode de réalisation), par le serrage de l'ajustement A3, alors que le maintien en translation est assuré par la butée de la collerette 681 de la douille 680 contre la bague interne 646, la butée de la bague intérieure 646 contre le fond de l'échancrure 677 par la collerette 647 et la butée de la tête 666 au fond du chanfrein 671.

Le septième mode de réalisation est représenté à la figure 13 et représente une variante du sixième mode de réalisation, où la douille 680 à collerette est remplacée par une douille 780 sans collerette. La tige 760 comprend un collet de sertissage 763 à son extrémité inférieure grâce à l'opération d'un alésage 765 sur une hauteur suffisante. Le collet de sertissage 763 est repoussé sur la douille 780, qui est munie d'un chanfrein inférieur 781 sur sa face interne. Le sertissage et l'ajustement serré entre la partie 764 de la tige à l'endroit de la douille 780, et cette dernière, renforce ici encore la liaison entre la douille 780 et la tige 760 contre les mouvements en rotation ou en translation.

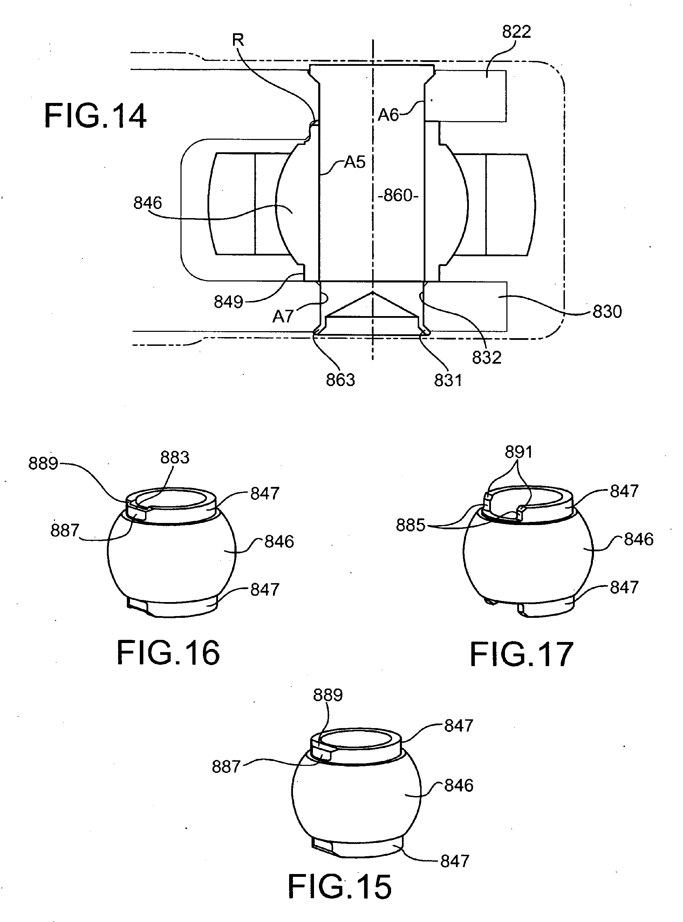

Le huitième mode de réalisation est illustré à la figure 14 et se distingue du précédent en ce qu'il n'existe plus de douille. Le sertissage de la tige 860 s'effectue en repoussant un collet 863 placé de façon analogue au collet 763 dans un chanfrein 831 à l'extrémité extérieure de l'alésage 832 de la deuxième oreille 830. Les ajustement A3 et A4 sont remplacés par un ajustement serré unique A7 entre la tige 860 et l'alésage 832 de la seconde oreille 830 ; les ajustements A5, A6 sont glissants tous les deux.

La tige 860 est retenue en rotation et en translation avec une force suffisante entre sa tête et le sertissage, et la bague intérieure 846 comprend désormais une collerette 849 s'appuyant contre la face interne de la seconde oreille 830. Une disposition de blocage par une facette plane, semblable à celle du sixième et du septième mode de réalisation, arrête la bague interne 846. Dans ce mode de réalisation, on accepte que la bague intérieure 846 soit retenue immédiatement entre les oreilles 822 et 830 de la chape. Les figures 15, 16 et 17 illustrent certaines formes possibles de la bague intérieure 846, qu'on pourrait attribuer aussi aux bagues intérieures 646 et 746 du sixième et du septième mode de réalisation.

Ces formes comprennent toutes les collerettes 847 aux pôles de la sphère, là où celle-ci est tronquée, et des entailles sur ces collerettes 847. Ces entailles servent à former la facette plane d'arrêt en rotation. Une seule des deux collerettes 847 doit être entaillée, mais il n'est pas gênant d'entailler les deux pour donner une possibilité supplémentaire de montage, et c'est ce qu'on a illustré ici.

A la figure 15, une facette plane 887 est usinée sur une partie de circonférence de la collerette 847, et un chanfrein 889 est ajouté à la jonction de la facette plane 887 et de la face supérieure de la collerette 847 pour supprimer une arête vive et échapper au rayon de raccordement R établi au fond l'échancrure de la première douille 822 (il est illustré à la figure 14). A la figure 16, on ajoute un usinage de la face supérieure de la collerette 847 pour y former un redan supérieur 883 ; cette conception est à conseiller quand l'épaisseur subsistante de la collerette 847 est trop faible près du chanfrein 889 dans la réalisation de la figure 15. Enfin, la figure 17 représente une situation obtenue si la collerette 847 a une épaisseur trop faible pour qu'on lui applique les réalisations précédentes : elle est alors usinée sur toute son épaisseur, ouverte, et la facette plane 887 est remplacées par une paire de facettes planes 885 plus petites, séparées et en prolongement dans un plan commun ; comme ci-dessus, des chanfreins 891 sont favorablement usinés aux jonctions des facettes planes 885 et de la face supérieure de la collerette 847.

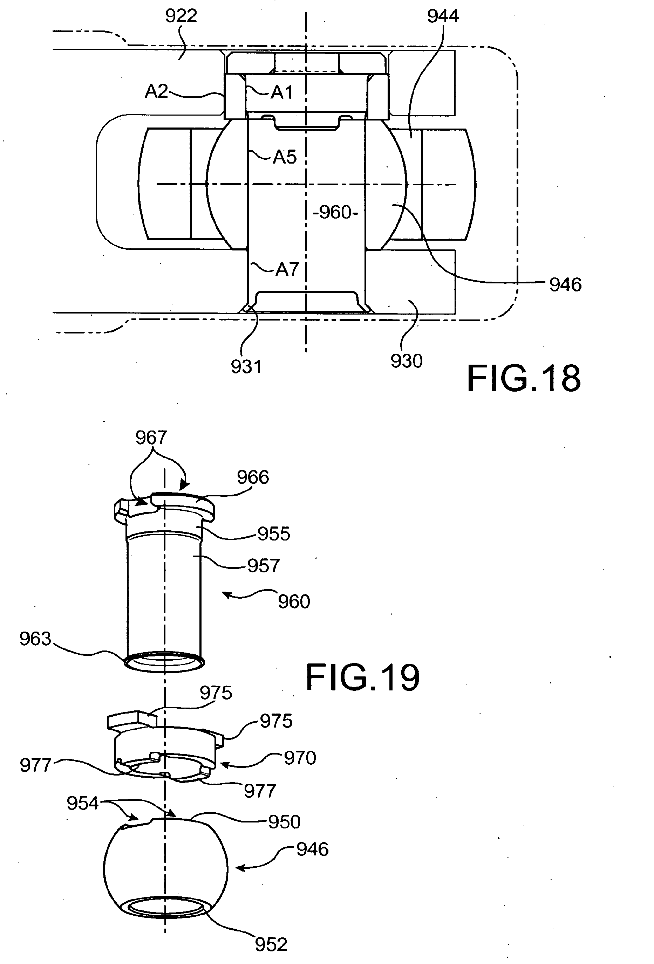

Le neuvième mode de réalisation est décrit aux figures 18, 19 et 20. Le dispositif comprend principalement, outre la chape, une tige 960, une bague intérieure 946, une bague extérieure 944 et une douille 970. La tige 960 comprend une tête 966 enfoncée dans l'alésage de la première oreille 922 de la chape et affleurant à sa surface pour un encombrement réduit. La tige 960 comprend un collet 963 à son extrémité opposée, à sertir sur un chanfrein 931 de la deuxième oreille 930. La tige 960 comprend deux portées 955 et 957 successives circulaires et s'appuyant respectivement sur des alésages de la douille 970 de la bague intérieure 946 et de la seconde oreille 930. La douille 970 est aussi engagée dans l'alésage de la première oreille 922. Les ajustements présents aux portées 955 et 957 ainsi qu'entre la douille 970 et la première oreille 922 sont dénommés A1, A2, A5 et A7 conformément aux diverses réalisations précédentes. L'ajustement A1 est serré et les ajustements A2, A5 et A7 sont glissants. La bague intérieure comprend deux surfaces circulaires planes d'extrémité 950 et 952 respectivement en appui sur la douille 970 et sur la face interne de la seconde oreille interne 930. Comme la douille 970 bute contre la tête 966, le système est parfaitement bloqué en translation et maintenu en place par le sertissage.

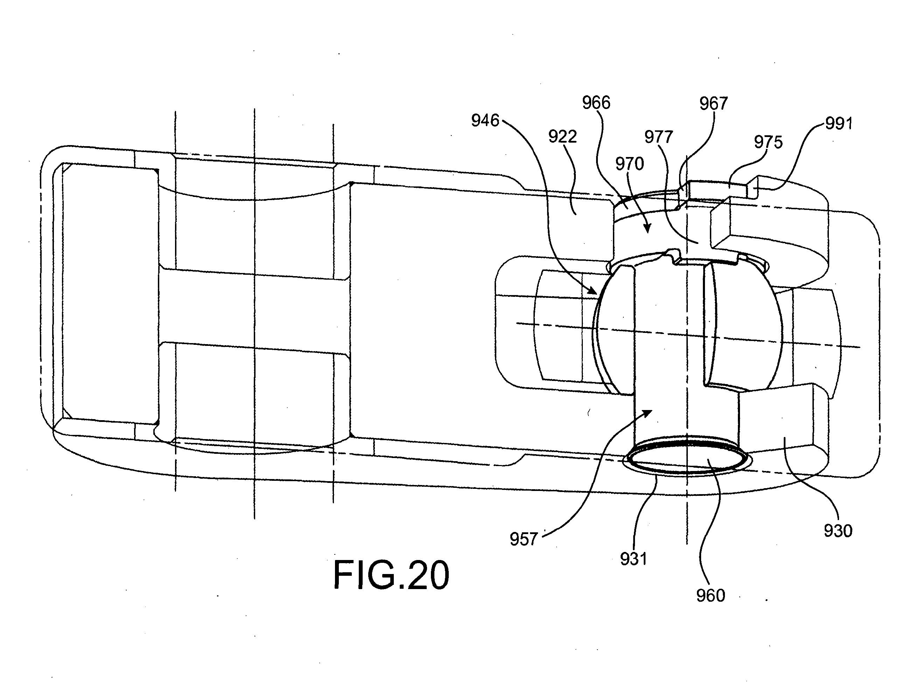

Le blocage en rotation de la bague intérieure 946 et des autres éléments du système est assuré par l'ajustement A1 et aussi par des ergots 975 et 977 aux deux faces d'extrémité opposées de la douille 970, qui pénètrent, pour les ergots 977, dans des creux 954 associés de la bague intérieure 946 (figure 19) et, pour les ergots 975, dans des creux 967 associés de la tête 966 de tige par leur portion intérieure (figure 19) et dans des rainures 991 associées de la première oreille 922 par leur portion extérieure (figure 20).

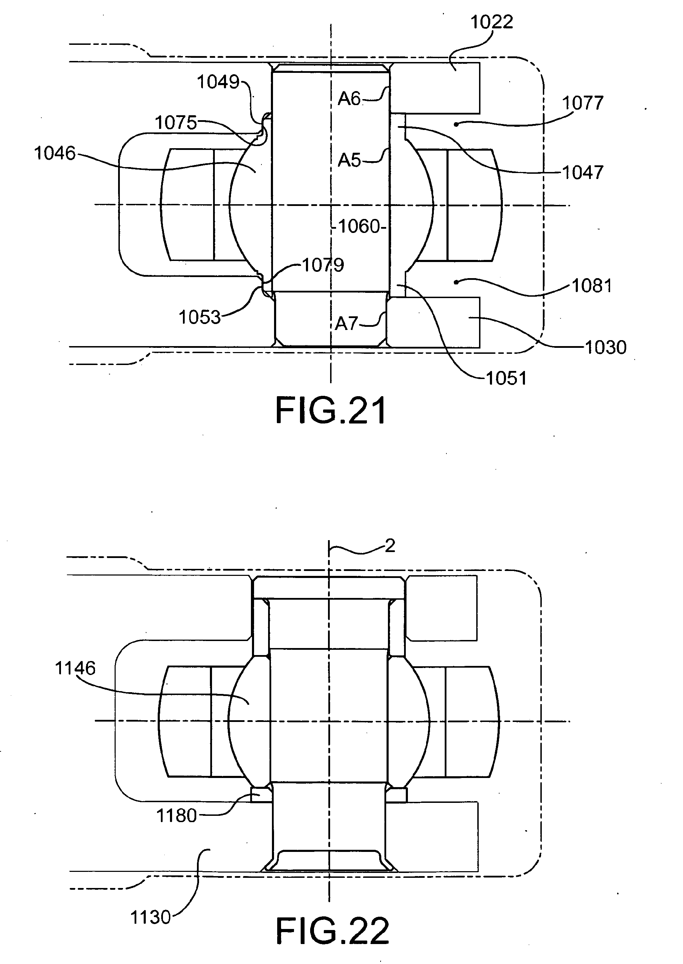

Le dixième mode de réalisation, illustré à la figure 21, est différent et comprend une tige 1060 sensiblement lisse, dépourvue de tête, et aucune douille. La bague intérieure 1046 est une noix dite à grand débattement de la bague extérieure, qui comprend des collerettes 1047, 1051 opposées munies de facettes plates 1049 et 1053 périphériques qui s'appuient sur des facettes plates correspondantes 675 et 679 au fond d'échancrures 1077 et 1081 établies sur les faces internes des oreilles 1022 et 1030. On retrouve des ajustements A5, A6 et A7 analogues à d'autres déjà rencontrés entre la tige 1060, les alésages des oreilles 1022 et 1030 et la bague intérieure 1046. L'ajustement A7 entre une extrémité distale de la tige 1060 la seconde oreille 1030 est serré, les deux autres sont glissants. La tige 1060 est retenue dans la seconde oreille 1030, et la bague intérieure 1046 est retenue en translation entre les deux oreilles 1022 et 1030, sur les faces internes desquelles elle s'appuie par un ajustement glissant juste. La rotation de la bague intérieure 1046 est arrêtée par les contacts des facettes plates 1049 et 1053.

Le onzième mode de réalisation sera décrit en s'appuyant sur la figure 22. Il est similaire au neuvième mode de réalisation, avec entre autres une douille 1170 coincée dans l'alésage des oreilles de chape entre une tête 1166 de tige enfoncée complètement dans cet alésage et la bague intérieure 1146, si ce n'est qu'une bague 1180 est introduite autour de la tige et retenue entre la bague intérieure 1146 et la seconde oreille 1130 de la chape. Les ajustements et leurs caractéristiques sont identiques. La bague 1180 sert d'entretoise pour procurer à la bague intérieure 1146 une position mieux centrée dans la chape en direction de l'axe 2.

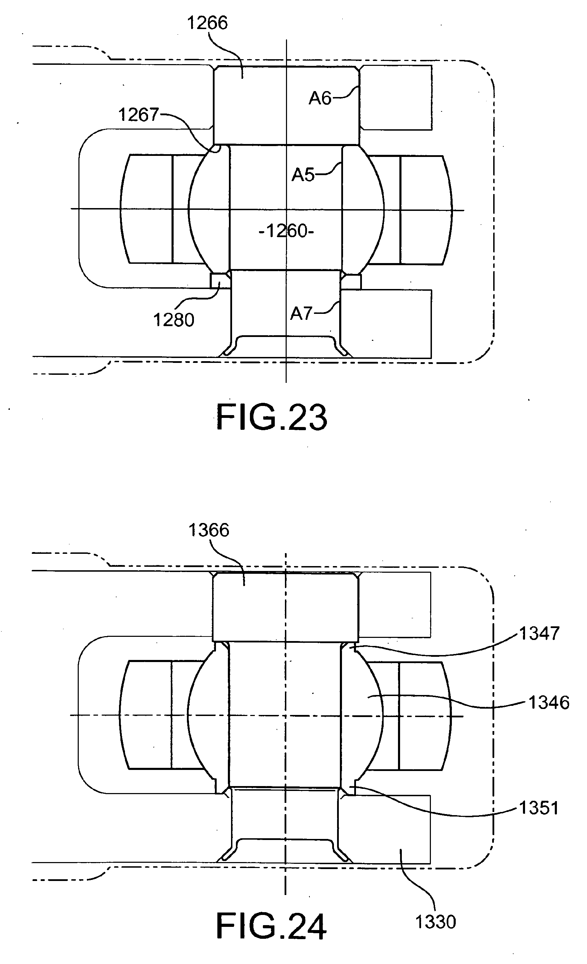

Le douzième mode de réalisation est décrit au moyen de la figure 23. Il diffère du précédent en ce que la douille est absente et remplacée par une tête 1266 massive de la tige 1260, qui est pourvue d'une surface 1267 plane et orthogonale à l'axe 2 d'appui d'une face plane polaire de la bague intérieure 1246. On retrouve des ajustements analogues à ceux déjà rencontrés sous les références A5, A6 et A7 et dans lesquels l'ajustement A7 entre la tige 1260 et l'alésage de l'oreille opposée à la tête de tige 1266 est serré, les autres sont glissants. La rotation peut être arrêtée seulement en assurant une compression de la bague intérieure 1246 contre la tige 1266 et la bague d'entretoise 1280 (analogue à la bague précédente 1180), et en maintenant l'ensemble en place par le sertissage au bout de la tige 1266.

Un treizième mode de réalisation sera décrit au moyen de la figure 24. La bague d'entretoise est supprimée et la bague intérieure 1346 est ici munie de deux collerettes 1347 et 1351 opposées pour assurer l'appui contre la tête de tige 1366 et la seconde oreille 1330 de la chape. Des ajustements semblables aux précédents existent.

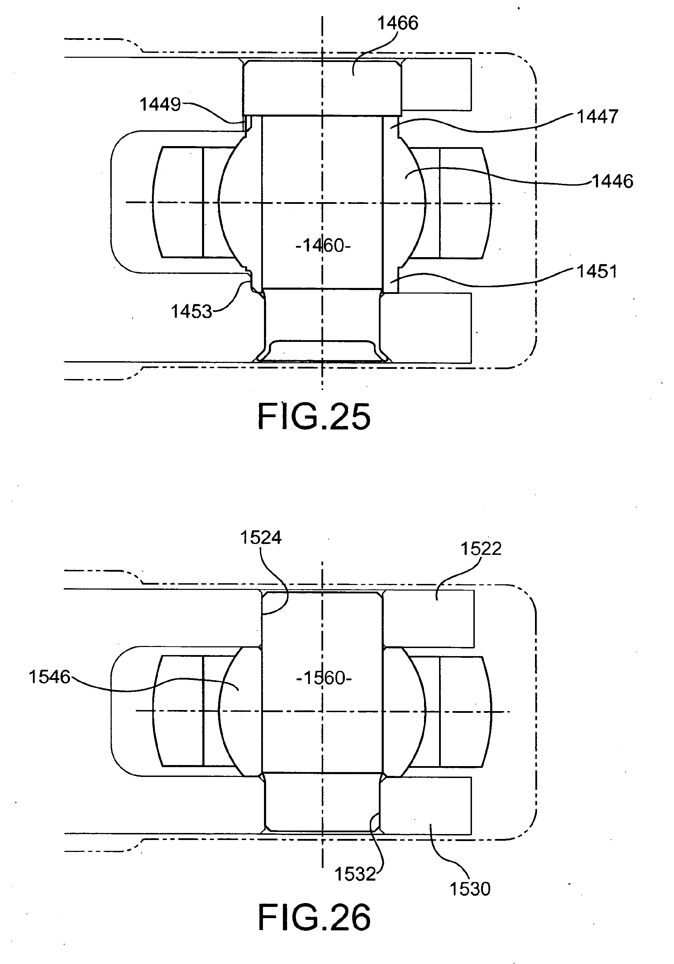

Un quatorzième mode de réalisation est décrit au moyen de la figure 25. La disposition de la bague intérieure 1466 ressemble à celle de la figure 21, avec, à ses extrémités polaires, une paire de collerettes 1447 et 1451 munies chacune d'une facette plate 1449 ou 1453 arrêtée en rotation contre une facette plate correspondante au fond d'une échancrure de l'oreille de chape adjacente. Les collerettes 1647 et 1451 butent respectivement contre la tête 1466 et la seconde oreille de chape 1430. La tige 1460 est toutefois différente et évoque plutôt celle de la figure 23 avec une tête de tige 1466 massive en appui sur une extrémité de collerette 1447 et un collet à sertir sur un chanfrein de l'oreille de chape à l'opposé de la tête de tige 1466. Cette disposition permet d'éviter de maintenir la bague intérieure 1246 entre les deux oreilles de chape. Les ajustements sont semblables à ceux de la figure 23. Les blocages en translation et en rotation sont assurés par le serrage de l'ajustement à l'extrémité de la tige 1460, par le sertissage et par les facettes planes.

Un quinzième mode de réalisation sera décrit en liaison à la figure 26. Il correspond à une conception particulièrement simple, avec une tige 1560 dépourvue de tête, engagée directement dans les alésages 1524 et 1532 des oreilles 1522 et 1530 et où la bague intérieure 1546 est retenue axialement entre les faces internes des deux oreilles en s'appuyant sur elles par des surfaces lisses, donc dépourvues de collerettes ou d'ergots. Une bague intérieure ordinaire est représentée comme dans d'autres modes de réalisation et notamment le dixième ; une bague intérieure à collerettes latérales, dite noix à grand débattement, pourrait être employée. Comme dans des réalisations de ce genre où la bague intérieure est montée directement entre les deux oreilles, comme le huitième mode de réalisation, l'ajustement de la bague intérieure 1546 sur la tige 1560 est légèrement glissant et la bague intérieure 1546 est retenue axialement par un ajustement précis, comme H7g6 ou H7h6 entre les oreilles 1522 et 1530 des chapes. La tige 1560 est retenue dans un des alésages, 1532 par exemple, d'oreille de chape par un ajustement serré qui la maintient en place. Dans de telles conceptions, la tige 1560 peut être entièrement contenue dans la chape, sans affleurer à la surface des oreilles, ce qui constitue un intérêt pouvant compenser l'incertitude d'un maintien suffisant de la bague intérieure 1546. Un tel système est de plus très simple à fabriquer.

Dans tous les modes de réalisation à partir du neuvième, la tige est entièrement contenue dans les deux alésages d'oreille de chape. Ce sont les montages les moins consommateurs d'espace. Cela dit, dans tous les cas de figure, la tige peut être entièrement contenue dans l'encombrement des oreilles de chape à condition d'accepter un encombrement légèrement supérieur des chapes de renvoi.

Tous les mode de réalisation de l'assemblage qu'on a décrits ici peuvent être aménagés, par exemple en les combinant entre eux.

## Revendications

1. Assemblage d'un dispositif rotulant sur une chape (10) de renvoi d'angle par des moyens d'assemblage, lesdits moyens d'assemblage comportant une tige d'assemblage (60, 260, 360, 560, 660, 760, 860, 1060, 1260, 1460, 1560) et d'autres moyens d'assemblage,
danse lequel ledit dispositif rotulant comporte une bague intérieure (46, 246, 346, 646, 846, 946, 1046, 1146, 1346, 1446, 1546) percée d'un alésage de bague et une bague extérieure,
dans lequel ladite chape de renvoi d'angle comporte deux oreilles (22, 222, 322, 422, 522, 622, 822, 922, 1022, 1522, 30, 330, 630, 830, 930, 1030, 1130, 1330, 1530) percées chacune d'un alésage d'oreille (24, 624, 1524, 32, 832) respectif, lesdits alésages d'oreille étant alignés l'un avec l'autre suivant un axe d'assemblage (2), et
dans lequel ladite tige d'assemblage traverse successivement l'un des alésages d'oreille, puis l'alésage de bague, puis l'autre alésage d'oreille,
lesdits autres moyens d'assemblage comportant un ajustement serré (A3) d'une portion de la tige sur une surface dans laquelle ladite portion est engagée, **caractérisé en ce que** lesdits autres moyens d'assemblage comprennent une paire de facettes planes en opposition, une des facettes planes (23, 275, 475, 675, 1075) étant opérée dans une échancrure d'une des oreilles de chape.

2. Assemblage selon la revendication 1, **caractérisé en ce que** la surface est une surface d'un des alésages d'oreille (1532).

3. Assemblage selon la revendication 1, **caractérisé en ce que** la surface est une surface d'une douille (80, 280, 380,...) engagée dans un des alésages d'oreille.

4. Assemblage selon l'une quelconque des revendications 1 à 3, **caractérisé en ce que** la portion de la tige à l'ajustement serré est opposée à une tête de la tige (66, 266, 366, ...) s'appuyant sur une face extérieure d'une des oreilles (22, 222, 322,...) de la chape (10) et faisant partie desdits autres moyens d'assemblage.

5. Assemblage selon l'une quelconque des revendications 1 à 4, **caractérisé en ce que** lesdits autres moyens d'assemblage comprennent une douille (680, 780, 970, 1170) engagée dans un des alésages d'oreille de la chape autour de la tige et comprenant une face d'extrémité en appui sur la bague intérieure.

6. Assemblage selon l'une quelconque des revendications 1 à 5, **caractérisé en ce que** lesdits autres moyens d'assemblage comprennent deux douilles (70, 270, 370, ..., 80, 280, 380, ...) engagées respectivement dans les alésages d'oreille de la chape autour de la tige et comprenant chacune une face d'extrémité en appui sur la bague intérieure.

7. Assemblage selon la revendication 6, **caractérisé en ce qu'**une des douilles (70, 270, 370, ...) comprend un épaulement comprenant la face d'extrémité en appui sur la bague intérieure, et une face opposée en appui sur une des oreilles de chape.

8. Assemblage selon l'une quelconque des revendications 1 à 7, **caractérisé en ce que** lesdits autres moyens d'assemblage comprennent des ergots (708, 975) et des redans (54, 967) appariés unissant la bague intérieure à d'autres pièces de l'assemblage.

9. assemblage selon les revendications 6 et 8, **caractérisé en ce que** lesdites autres pièces de l'assemblage (70, 270, 370,..., 80, 280, 380,...708) qui sont unies par les ergots et les redans sont les deux douilles.

10. Assemblage selon les revendications 5 et 8, **caractérisé en ce que** lesdites autres pièces de l'assemblage qui sont unies par les ergots (975) et les redans (967) sont la douille (970) et une tête (966) de la tige.

11. Assemblage selon la revendication 1, **caractérisé en ce qu'**une autre des facettes planes (68) est opérée sur une tête de la tige.

12. Assemblage selon les revendications 1 et 4, **caractérisé en ce qu'**une autre des facettes planes (273, 473) est opérée sur la douille.

13. Assemblage selon la revendication 1, **caractérisé en ce qu'**une autre des facettes planes (649, 881, 885, 887) est opérée sur un collet circulaire (647, 847) à une extrémité polaire de la bague intérieure.

14. Assemblage selon l'une quelconque des revendications 1 à 13 et la revendication 4, **caractérisé en ce que** lesdits autres moyens d'assemblage comprennent des sertissages opérés entre la tige et la douille.

15. Assemblage selon la revendication 14, **caractérisé en ce que** les sertissages sont exécutés en rabattant un collet (363, 763, 963) à une extrémité de la tige sur la douille.

16. Assemblage selon la revendication 14, **caractérisé en ce que** les sertissages sont exécutés en rabattant des languettes (371) de la douille (370) dans des fentes (361) de la tige.

17. Assemblage selon l'une quelconque des revendications 1 à 13, **caractérisé en ce que** lesdits autres moyens d'assemblage comprennent des sertissages opérés en rabattant un collet (863, 963) à l'extrémité de la tige sur une des oreilles de chape.

18. Assemblage selon l'une quelconque des revendications 1 à 17, **caractérisé en ce que** la tige comprend une tête, et une des oreilles de chape un creux dans lequel la tête est partiellement enfoncée.

19. Assemblage selon la revendication 18, **caractérisé en ce que** la tête (666) et le creux (672) sont coniques.

20. Assemblage selon l'une quelconque des revendications 1 à 19, **caractérisé en ce que** la tige comprend une tête (1266, 1366) enfoncée complètement dans un des alésages d'oreille de chape, et butant sur la bague intérieure.

21. Assemblage selon l'une quelconque des revendications 1 à 20 et la revendication 5, **caractérisé en ce que** la tige comprend une tête (966, 1166) enfoncée complètement dans un des alésages d'oreille de chape, et butant sur la douille (970, 1170).

22. Assemblage selon l'une quelconque des revendications 1 à 21, **caractérisé en ce que** la tige (960, 1060, ...) est enfoncée complètement dans les deux alésages d'oreille de chape.

23. Assemblage selon la revendication 1, **caractérisé en ce que** la bague intérieure est retenue entre une tête (1266, 1366, 1466) de la tige et soit une des oreilles ( 1330, 1430) de chape, soit une entretoise (1280) située entre la bague intérieure et une des oreilles de chape.

24. Système de commande d'un redresseur à calage variable comprenant un assemblage selon l'une quelconque des revendications 1 à 23.

25. Moteur d'aéronef muni d'un assemblage selon l'une quelconque des revendications 1 à 23.

## Claims

1. An assembly of a device swiveling on a bell crank fork (10) by assembly means, said assembly means comprising an assembly rod (60, 260, 360, 560, 660, 760, 860, 1060, 1260, 1460, 1560) and other assembly means,
in which said swiveling device comprise an internal ring (46, 246, 346, 646, 846, 946, 1046, 1146, 1346, 1446, 1546) penetrated by a ring bore and an external ring,
in which said bell crank fork comprises two lugs (22, 222, 322, 422, 522, 622, 822, 922, 1022, 1522, 30, 330, 630, 830, 930, 1030, 1130, 1330, 1530) each penetrated by one respective lug bore (24, 624, 1524, 32, 832), said lug bores being aligned with one another according to an assembly axis (2), and
in which said assembly rod passes successively through one of the lug bores, then the ring bore, then the other lug bore,
said other assembly means having a tight fit (A3) of one portion of the rod on a surface in which said portion is engaged, wherein said further assembly means comprise a pair of opposing planar facets, one of the planar facets (23, 275, 475, 675, 1075) being made in an indentation of one of the fork lugs.

2. The assembly as claimed in claim 1, wherein the surface is a surface of one of the lug bores (1532).

3. The assembly as claimed in claim 1, wherein the surface is a surface of a bushing (80, 280, 380, etc.) engaged in one of the lug bores.

4. The assembly as claimed in any one of claims 1 to 3, wherein the portion of the rod having a tight fit opposes a head of the rod (66, 266, 366, etc.) resting on an external face of one of the lugs (22, 222, 322, etc.) of the fork (10) and forming part of said other assembly means.

5. The assembly as claimed in any one of claims 1 to 4, wherein said other assembly means comprise a bushing (680, 780, 970, 1170) engaged in one of the lug bores of the fork around the rod and having one end face bearing against the internal ring.

6. The assembly as claimed in any one of claims 1 to 5, wherein said other assembly means comprise two bushings (70, 270, 370, etc., 80, 280, 380, etc.) engaged respectively in the lug bores of the fork around the rod and each comprise an end face bearing against the internal ring.

7. The assembly as claimed in claim 6, wherein one of the bushings (70, 270, 370, etc.) comprises a shoulder comprising the end face bearing against the internal ring, and an opposing face bearing against one of the fork lugs.

8. The assembly as claimed in any one of claims 1 to 7, wherein said other assembly means comprise matching lugs (708, 975) and steps (54, 967), joining the internal ring to other parts of the assembly.

9. The assembly as claimed in claims 6 and 8 wherein said other assembly parts (70, 270, 370, etc., 80, 280, 380, etc., 780) which are joined by the lugs and the steps are the two bushings.

10. The assembly as claimed in claims 5 and 8, wherein said other assembly parts which are joined by the lugs (975) and the steps (967) are the bushing (970) and a head (966) of the rod.

11. The assembly as claimed in claim 1, wherein another of the planar facets (68) is made on a head of the rod.

12. The assembly as claimed in claims 1 to 4, wherein another of the planar facets (273, 473) is made on the bushing.

13. The assembly as claimed in claim 1, wherein another of the planar facets (649, 881, 885, 887) is made on a circular collar (647, 847) at one polar end of the internal ring.

14. The assembly as claimed in any one of claims 1 to 13 and claim 4, wherein said further assembly means comprise crimping carried out between the rod and the bushing.

15. The assembly as claimed in claim 14, wherein the crimpings are carried out by folding back a collar (363, 763, 963) at one end of the rod onto the bushing.

16. The assembly as claimed in claim 14, wherein the crimping is carried out by folding back tabs (371) of the bushing (370) into slots (361) of the rod.

17. The assembly as claimed in any one of claims 1 to 13, wherein said other assembly means comprise crimping carried out by folding back a collar (863, 963) at the end of the rod onto one of the fork lugs.

18. The assembly as claimed in any one of claims 1 to 17, wherein the rod comprises a head and one of the fork lugs comprises a recess into which the head is partially forced.

19. The assembly as claimed in claim 18, wherein the head (666) and the recess (672) are conical.

20. The assembly as claimed in any one of claims 7. to 19, wherein the rod comprises a head (1266, 1366) completely forced into one of the fork lug bores, and abutting against the internal ring.

21. The assembly as claimed in any one of claims 1 to 20 and claim 5, wherein the rod comprises a head (966, 1166) completely forced into one of the fork lug bores and abutting against the bushing (970, 1170).

22. The assembly as claimed in any one of claims 1 to 21, wherein the rod (960, 1060, etc.) is completely forced into the two fork lug bores.

23. The assembly as claimed in claim 1, wherein the internal ring is retained between a head (1266, 1366, 1466) of the rod, and either one of the fork lugs (1330, 1430), or a spacer (1280) located between the internal ring and one of the fork lugs.

24. A control system for a variable pitch flow-straightener comprising an assembly as claimed in any one of claims 1 to 23.

25. An aircraft engine provided with an assembly as claimed in any one of claims 1 to 23.

## Patentansprüche

1. Montageanordnung einer Gelenkvorrichtung auf einem Gabelgelenk (10) zur Winkelrückstellung durch Montagemittel, wobei die Montagemittel einen Montagestift (60, 260, 360, 560, 660, 760, 860, 1060, 1260, 1460, 1560) und andere Montagemittel aufweisen,
bei welcher die Gelenkvorrichtung einen inneren Ring (46, 246, 346, 846, 946, 1046, 1146, 1346, 1446, 1546), der von einer Ringbohrung durchsetzt ist, und einen äußeren Ring aufweist,
bei welcher das Gabelgelenk zur Winkelrückstellung zwei Ösen (22, 222, 322, 422, 522, 622, 822, 922,1022, 1522, 30, 330, 630, 830, 930,1.030, 1130, 1330,1530) aufweist, die jeweils von einer Ösenbohrung (24, 624, 1524, 32, 832) durchsetzt sind, wobei die Ösenbohrungen nach einer Montageachse (2) miteinander ausgerichtet sind, und
bei welcher der Montagestift nacheinander eine der Ösenöffnungen, dann die Ringbohrung, dann die andere Ösenbohrung durchquert,
wobei die anderen Montagemittel einen Ruhesitz (A3) eines Abschnitts des Stifts auf einer Fläche aufweisen, mit welcher der Abschnitt in Eingriff steht, **dadurch gekennzeichnet, dass** die anderen Montagemittel ein Paar gegenüberliegender ebener Facetten aufweisen, wobei eine der ebenen Facetten (23, 275, 475, 675, 1075) in einer Aussparung einer der Gabelgelenkösen ausgeführt ist.

2. Montageanordnung nach Anspruch 1, **dadurch gekenntzeichnet, dass** die Fläche eine Fläche eine der Ösenbohrungen (1532) ist.

3. Montageanordnung nach Anspruch 1, **dadurch gekennzeichnet, dass** die Fläche eine Fläche einer Hülse (80, 280, 380, ...) ist, die in einer der Ösenbohrungen in Eingriff steht.

4. Montageanordnung nach einem der Ansprüche 1 bis 3, **dadurch gekennzeichnet, dass** der Abschnitt des Stifts zum Ruhesitz einem Kopf (66, 266, 366,...) des Stifts gegenüberliegt, der an einer Außenseite einer der Ösen (22, 222, 322, ...) des Gabelgelenks (10) anliegt und Teil der anderen Montagemittel ist.

5. Montageanordnung nach einem der Ansprüche 1 bis 4, **dadurch gekennzeichnet, dass** die anderen Montagemittel eine Hülse (680, 780, 970, 1170) aufweisen, die in einer der Ösenbohrungen des Gabelgelenks um den Stift in Eingriff stehen und eine Endseite in Anlage an dem inneren Ring aufweisen.

6. Montageanordnung nach einem der Ansprüche 1 bis 5, **dadurch gekennzeichnet, dass** die anderen Montagemittel zwei Hülsen (70, 270, 370, ..., 80, 280, 380, ...) aufweisen, die jeweils in den Ösenbohrungen des Gabelgelenks um den Stift in Eingriff stehen und eine Endseite in Anlage an dem inneren Ring aufweisen.

7. Montageanordnung nach Anspruch 6, **dadurch gekennzeichnet, dass** eine der Hülsen (70, 270, 370, ...) eine Schulter aufweist, welche die Endseite in Anlage an dem inneren Ring aufweist, und eine gegenüberliegende Seite in Anlage an einer der Gabelgelenkösen.

8. Montageanordnung nach einem der Ansprüche 1 bis 7, **dadurch gekennzeichnet, dass** die anderen Montagemittel gepaarte Ansätze (708, 975) und Schikanen (54, 967) aufweisen, welche den inneren Ring mit anderen Teilen der Montageanordnung vereinigen.

9. Montageanordnung nach den Ansprüchen 6 und 8, **dadurch gekennzeichnet, dass** die anderen Teile der Montageanordnung (70, 270, 370, ..., 80, 280, 380, ... 708), die durch die Ansätze und die Schikanen vereinigt sind, die beiden Hülsen sind.

10. Montageanordnung nach den Ansprüchen 5 und 8, **dadurch gekennzeichnet, dass** die anderen Teile der Montageanordnung, die durch die Ansätze (975) und die Schikanen (967) vereinigt sind, die Hülse (970) und ein Kopf (966) des Stifts sind.

11. Montageanordnung nach Anspruch 1, **dadurch gekennzeichnet**, das eine andere der ebenen Facetten (68) an einem Kopf des Stifts ausgeführt ist.

12. Montageanordnung nach den Ansprüchen 1 und 4, **dadurch gekennzeichnet, dass** eine andere der ebenen Facetten (273, 473) an der Hülse ausgeführt ist.

13. Montageanordnung nach Anspruch 1, **dadurch gekenntzeichnet, dass** eine andere der ebenen Facetten (649, 881, 885, 887) an einem kreisförmigem Bund (647, 847) an einem polaren Ring des inneren Rings ausgeführt ist.

14. Montageanordnung nach einem der Ansprüche 1 bis 13 und Anspruch 4, **dadurch gekennzeichnet, dass** die anderen Montagemittel Bördelverbindungen aufweisen, die zwischen dem Stift und der Hülse ausgeführt sind.

15. Montageanordnung nach Anspruch 14, **dadurch gekenntzeichnet, dass** die Bördelverbindungen ausgeführt sind, indem ein Bund (363, 763, 963) an einem Ende des Stifts an der Hülse umgeschlagen ist.

16. Montageanordnung nach. Anspruch 14, **dadurch gekennzeichnet, dass** die Bördelverbindungen ausgeführt sind, indem Zungen (371) der Hülse (370) in Spalte (361) des Stifts umgeschlagen sind.

17. Montageanordnung nach einem der Ansprüche 1 bis 13, **dadurch gekennzeichnet, dass** die anderen Montagemittel Bördelverbindungen aufweisen, die ausgeführt sind, indem ein Bund (863, 963) am Ende des Stifts an einer der Gabelgelenkösen umgeschlagen ist.

18. Montageanordnung nach einem der Ansprüche 1 bis 17, **dadurch gekenntzeichnet, dass** der Stift einen Kopf aufweist und eine der Gabelgelenkösen eine Aushöhlung, in welche der Kopf teilweise eingefügt ist.

19. Montageanordnung nach Anspruch 18, **dadurch gekennzeichnet, dass** der Kopf (666) und die Aushöhlung (672) konisch sind.

20. Montageanordnung nach einem der Ansprüche 1 bis 19, **dadurch gekennzeichnet, dass** der Stift einen Kopf (1266, 1366) aufweist, der vollständig in eine der Ösenbohrungen des Gabelgelenks eingefügt ist und sich an dem inneren Ring abstützt.

21. Montageanordnung nach einem der Ansprüche 1 bis 20 und Anspruch 5, **dadurch gekennzeichnet, dass** der Stift einen Kopf (966, 1166) aufweist, der vollständig in eine der Gabelgelenkösenbohrungen eingefügt ist und sich an der Hülse (970, 1170) abstützt.

22. Montageanordnung nach einem der Ansprüche 1 bis 21, **dadurch gekennzeichnet, dass** der Stift (960, 1060, ...) vollständig in beide Gabelgelenkösenbohrungen eingefügt ist.

23. Montageanordnung nach Anspruch 1, **dadurch gekenntzeichnet, dass** der innere Ring zwischen einem Kopf (1266, 1366, 1466) des Stifts und entweder einer der Gabelgelenkösen (1330, 1430) oder einer Strebe (1280) gehalten wird, die zwischen dem inneren Ring und einer der Gabelgelenkösen liegt.

24. System zum Steuern eines Leitapparats mit variabler Einstellung, das eine Montageanordnung nach einem der Ansprüche 1 bis 23 aufweist.

25. Luftfahrzeugmotor, der mit einer Montageanordnung nach einem der Ansprüche 1 bis 23 ausgestattet ist.
